# EUROPÄISCHE PATENTSCHRIFT

(11) **EP 4 124 789 B1**
(45) Veröffentlichungstag und Bekanntmachung des Hinweises auf die Patenterteilung: **18.10.2023**
(21) Anmeldenummer: 22181449.4
(22) Anmeldetag: 28.06.2022
(51) Int. Cl.: F16P 3/14

(54) **ABSICHERN EINES BEWEGLICHEN MASCHINENTEILS**
SECURING OF A MOVABLE PART OF A MACHINE
FIXATION D'UNE PIÈCE DE MACHINE MOBILE

(30) Priorität: 27.07.2021 DE 102021119372
(43) Veröffentlichungstag der Anmeldung: 01.02.2023
(73) Patentinhaber: SICK AG, 79183 Waldkirch (DE)
(72) Erfinder: Hansen, Christoph, Hamburg (DE); Bühler, André, Freiamt (DE)

(56) Entgegenhaltungen:
- WO-A1-2010/072193

## Beschreibung

Die Erfindung betrifft ein Verfahren zum Absichern eines beweglichen Maschinenteils und ein Absicherungssystem für eine Maschine nach dem Oberbegriff von Anspruch 1 beziehungsweise 19.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration) bei minimalem Sicherheitsabstand auch in komplexen Umgebungen. Relevante Normen in diesem Zusammenhang sind beispielsweise die ISO 10218 für Industrieroboter oder die ISO 15066 für kollaborierende Roboter. Ähnliche Problemstellungen ergeben sich für andere Maschinen als Roboter, beispielsweise AGVs/AGCs (Automated Guided Vehicle / Carts) oder Drohnen. Für solche Anwendungen, in denen der Kontakt mit Personen nicht vermieden werden kann oder gar erwünscht ist, sind bisherige Sicherheitskonzepte durch Zäune und Absperrungen untauglich. Aber auch die Absicherung durch herkömmliche Sicherheitssensoren, wie Laserscanner, Lichtgitter oder Sicherheitskameras, eignet sich vorrangig für große, freie Überwachungsbereiche mit einfacher Geometrie.

Besondere Gefahren ergeben sich durch Werkzeuge aller Art, welche zur Manipulation oder zur Logistik von Werkstücken eingesetzt werden und an den distalen Enden der Achsen der Maschine montiert sind. Das ist beispielsweise ein an einem Roboterflansch montiertes Werkzeug, wie ein Greifer oder Dispenser, und dafür müssen mittels einer Risikobewertung Gefährdungen für die mitarbeitende Person ermittelt, bewertet und durch geeignete Maßnahmen eliminiert oder zumindest auf ein akzeptiertes Restrisiko reduziert werden. Um dieses Ziel zu erreichen, sollen in erster Linie Gefährdungen beseitigt und in zweiter Linie technische Schutzmaßnahmen angewendet werden. Bei Robotern besteht ein Ansatz darin, die Kraft so zu begrenzen, dass auch eine Kollision nicht zu ernsthaften Verletzungen führen kann. Zudem wird beim Design der mechanischen Roboterkomponenten bewusst auf kantenfreie, runde oder weiche Außenkonturen geachtet. Dabei bleiben jedoch Gefahrenquellen am Werkzeug selbst, das spitze, rotierende oder heiße Teile aufweisen kann, und auch Quetschungen, etwa der Hand zwischen Werkzeug und einer Halterung oder dergleichen auf einer Arbeitsfläche werden nicht zuverlässig verhindert.

Hier besteht nun grundsätzlich die Möglichkeit, einen kleinen, leichten Distanzsensor beziehungsweise eine Mehrfachanordnung solcher Distanzsensoren mit dem Werkzeug am Roboterarm mitzubewegen. Mit einem entsprechenden Distanzsensor befasst sich die DE 10 2015 112 656 A1. Damit wird eine Art virtueller Schutzmantel um das Werkzeug überwacht und der Roboter bei Eindringen eines sicherheitsrelevanten Objekts gebremst oder angehalten. Der Distanzsensor ist, jedenfalls im Verbund mit der übergeordneten Steuerung, sicher ausgelegt, und zum Erreichen eines höheren Sicherheitsniveaus sind Tests in Form einer Referenzfahrt bei bekannten Referenzzielen möglich.

Derartige Tests sind notwendig, damit die Schutzfunktion nicht unerkannt aufgrund eines Defekts der Distanzsensoren ausfällt. Die DE 10 2019 110 882 B4 greift unter anderem diesen Aspekt auf. Es ist ein sogenannter Prüf- oder Checkpunkt vorgesehen, der im Betrieb zyklisch angefahren wird, um für einen Funktionstest zu prüfen, ob das System mit den gemessenen Abstandswerten in der erwarteten Weise auf Abstandsschwellen reagiert, die zuvor anhand eines Referenzziels eingelernt wurden, oder die gemessenen Abstandswerte werden mit zuvor eingelernten Referenzwerten verglichen.

Für einen derartigen regelmäßigen Funktionstest muss das Ablaufprogramm der Roboteranwendung unter zusätzlichem Aufwand die Bedingung erfüllen, dass der Prüfpunkt zyklisch angefahren wird. Das zyklische Anfahren kostet wertvolle Zeit, erzeugt zusätzliche Bewegungspfade, damit möglicherweise zusätzliche Gefahrenstellen, es verringert dadurch die Produktivität des Gesamtsystems und erhöht den Planungsaufwand. Je nach Anwendung kann diese Einschränkung einen spürbaren Einfluss auf die Wirtschaftlichkeit haben. Der Zeitaufwand für einen solchen Funktionstest muss womöglich durch schnellere Bewegungen wieder eingespart werden und belastet dadurch unnötig die mit dem Roboter kooperierende Person. Unterbleibt das regelmäßige Anfahren des Prüfpunkts, muss der Roboter vorsorglich angehalten werden. Ein Wiederanlauf erfordert eine manuelle Freigabe und eine direkte Überprüfung der Messdaten am Prüfpunkt. Ferner werden an den Prüfpunkt spezielle Anforderungen gestellt, beispielsweise eine ebene Fläche sowie ein unveränderter Hintergrund, um die Messdaten zuverlässig testen zu können.

Die DE 20 2014 100 965 U1 offenbart eine schnelle Kontrolle eines Werkzeugs im Produktivbetrieb einer Werkzeugmaschine mit einem Lichtgitter, indem Anzahl und Position der Lichtachsen zur Auswertung des Werkzeuges einstellbar sind. Dabei muss der Verarbeitungsablauf der Werkzeugmaschine nicht oder nur in sehr geringem Maße modifiziert werden. Für die hier betrachteten Anwendungen ist ein Lichtgitter dennoch bei Weitem zu sperrig und unflexibel.

Die WO2010072193A1 offenbart eine Sicherungsvorrichtung zum Betreiben einer mehrgliedrigen Maschine, mit einer Vielzahl an Abstandserfassungseinheiten, wobei die Abstandserfassungseinheiten zumindest einen Sensor zum Ermitteln eines Abstands des Sensors zu einem in einer Sensorrichtung etwaig vorhandenen Objekt und eine Kommunikationsvorrichtung, die eingerichtet ist zum Abgeben eines Signals, das den Abstand kodiert, umfassen, und einer Zentraleinheit, die ausgebildet und eingerichtet ist, um die Signale der Abstandserfassungseinheiten zu empfangen, daraus zeitabhängig eine Position der Abstandserfassungseinheiten in einem vorgegebenen Koordinatensystem zu ermitteln und ein Warnsignal abzugeben, wenn das etwaig vorhandene Objekt kein Teil der Maschine ist und der Abstand einen vorgegebenen Schwellenwert unterschreitet.

Es ist daher Aufgabe der Erfindung, eine gattungsgemäße Absicherung eines beweglichen Maschinenteils zu verbessern. Eine weitere Aufgabe der Erfindung besteht darin, die notwendige Validierung der Messdaten vor einem bzw. während eines Einlernvorgangs der notwendigen Referenzwerte zu automatisieren, sodass keine manuelle Validierung durch den Nutzer erforderlich ist.

Diese Aufgabe wird gemäß Anspruch 1 gelöst durch ein Verfahren zum Absichern eines beweglichen Maschinenteils einer Maschine, insbesondere eines Roboterarms, wobei von mindestens einem mit dem Maschinenteil mitbewegten berührungslosen Distanzsensor längs mehrerer Messstrahlen je ein Abstandswert gemessen wird und die gemessenen Abstandswerte mit mindestens einer Abstandsschwelle verglichen werden, um zu entscheiden, ob eine sicherheitsgerichtete Reaktion der Maschine eingeleitet wird, wobei die Funktionsfähigkeit des Distanzsensors durch Vergleich mindestens eines gemessenen Abstandswertes mit mindestens einem Referenzwert getestet wird, wobei das bewegliche Maschinenteil und mit ihm der Distanzsensor in eine andere Orientierung gedreht wird, um die Funktionsfähigkeit für andere Messstrahlen zu testen.

Die Aufgabe wird weiter gemäß Anspruch 19 gelöst durch ein Absicherungssystem für eine Maschine.

Das bewegliche Maschinenteil kann die gesamte Maschine sein, wie im Falle eines Fahrzeugs. Die Maschine ist insbesondere ein Roboter oder Roboterarm mit einem Werkzeug, das vornehmlich abzusichern ist (EOAS, End-of-Arm-Safeguarding). Dieses Anwendungsbeispiel eines Roboters wird im Folgenden vielfach stellvertretend verwendet, die Erläuterungen sind jeweils analog auf ein anderes bewegliches Maschinenteil zu übertragen. Mit dem Maschinenteil wird mindestens ein berührungsloser Distanzsensor mitbewegt, insbesondere durch Anbringen an dem Maschinenteil in der Nähe oder Umgebung eines Werkzeugs, um längs mehrerer Messstrahlen je einen Abstandswert zu messen. Messstrahlen sind vorzugsweise in einem weiten Sinne zu verstehen, beispielsweise auch als Sichtbereich eines Pixels oder einer Pixelgruppe. Für die mehreren Messstrahlen sind mehrere Distanzsensoren vorgesehen, und/oder ein Distanzsensor weist mehrere Messstrahlen auf. Die längs der Messstrahlen gemessenen Abstandswerte werden mit mindestens einer Abstandsschwelle verglichen, und erforderlichenfalls wird eine sicherheitsgerichtete Reaktion der Maschine ausgelöst, um die Maschine in einen sicheren Zustand zu versetzen, beispielsweise durch ein Verlangsamen, Ausweichen oder einen Nothalt. Dabei muss nicht jedes eingreifende Objekt sofort die sicherheitsgerichtete Reaktion auslösen, beispielsweise können kleine Objekte oder ganz kurze Eingriffe toleriert werden. Die Messstrahlen bilden gemeinsam eine Art virtuellen Schutzmantel oder virtuelle Schutzglocke, die allerdings nicht zu allen Seiten geschlossen sein muss.

Das bewegliche Maschinenteil und mit ihm der Distanzsensor wird in eine andere Orientierung gedreht, um die Funktionsfähigkeit für andere Messstrahlen zu testen. Dies verändert den Arbeitsablauf nicht, um den Funktionstest zu ermöglichen und zu unterstützen. Beispielsweise kann die Drehung oder Verkippung der eigentlichen Arbeitsbewegung überlagert werden, ohne sie zu stören oder spürbar zu verzögern. Damit wird der Nachteil des herkömmlichen Anfahrens von Prüfpunkten vermieden.

Aufgrund des rotationssystemmetrischen Designs des Distanzsensors, können durch eine entsprechende Drehung benachbarte Messstrahlen gegeneinander verglichen werden. Beispielsweise wird der Roboterflansch so gedreht, dass sich zwei Messmodule des Distanzsensors vor und nach der Drehung jeweils in derselben Position befinden. Dabei wird die gemessene Distanz des ersten Messmoduls als Referenzwert gespeichert und nach der Drehung gegen den gemessenen Distanzwert des zweiten Messmoduls verglichen. Da die zu validierenden Funktionen der beiden Messmodule voneinander unabhängig sind, kann so eine automatisierte Validierung durchgeführt werden. Sollte sich der Hintergrund zwischen den beiden Messzeitpunkten verändert haben, z.B. durch den Eingriff einer Hand, schlägt die Validierung fehl und muss erneut durchgeführt werden. In diesem Fall wird dem Bediener eine aussagekräftige Fehlermeldung angezeigt.

Durch die automatisierte Validierung ist keine Nutzerinteraktion erforderlich. Daraus resultiert zum einen der Vorteil einer einfacheren und schnelleren Bedienung. Zum anderen ist eine technische Validierungsmaßnahme auch als sicherer einzustufen, da leichtfertige Freigaben durch den Nutzer ausgeschlossen werden. Für die Implementierung der Lösung ergibt sich der Vorteil, dass eine aufwändige Visualisierung der eingelernten Umgebungsinformationen für den Nutzer entfallen kann und somit auch der damit verknüpfte Spezifizierung- und Testaufwand.

Die Bewegung kann automatisch erfolgen oder erst nach einmaliger oder konstanter Freigabe durch den Bediener.

In Weiterbildung der Erfindung wird vor einem Einlernen oder während eines Einlernens das bewegliche Maschinenteil bzw. ein Roboterflansch so gedreht, dass sich zwei Messmodule vor und nach der Drehung jeweils in derselben Position befinden. Ein Messmodul weist beispielsweise einen Distanzsensor auf. Jedoch kann ein Messmodul auch mehrere Distanzsensoren aufweisen.

In Weiterbildung der Erfindung kann das Maschinenteil in der anderen Orientierung einen Arbeitsschritt weiterhin ausführen, insbesondere nach Drehung ein Objekt greifen oder bearbeiten. Das Drehen in eine andere Orientierung ist dann sozusagen neutral im Sinne des Arbeitsablaufs. Beispielsweise kann ein zweigliedriger Greifer um 180° verdreht dieselbe Funktion ausführen, je nach zu greifendem Objekt auch bei anderen Drehwinkeln. Das gilt analog für andere Werkzeuge, insbesondere solche mit Symmetrien, die durch die Drehung effektiv in sich selbst überführt werden. Für den mindestens einen Distanzsensor ist die Drehung nicht neutral, und das ist so beabsichtigt, damit andere Messstrahlen auf andere Messobjekte treffen beziehungsweise nicht in die Ferne gerichtet sind und so getestet werden können.

In Weiterbildung der Erfindung wird die Drehung in eine andere Orientierung in verschiedenen Messreichweiten durchgeführt.

Die automatisierte Validierung kann in beliebigen Messreichweiten wiederholt werden, um mögliche Fehler, die nur in bestimmten Distanzbereichen auftreten, zu erkennen. Dadurch werden systematische Fehler verhindert. Durch die Validierung bzw. Testung bei verschiedenen Messreichweiten wird die Testung weiter dynamisiert, wodurch die Testung qualitativ hochwertiger wird. Bei den verschiedenen Messreichweiten kann es sich um unterschiedliche Abstände zu einer Arbeitsoberfläche handeln.

In Weiterbildung der Erfindung wird die Drehung in eine andere Orientierung in zwei oder mehreren Schritten vorgenommen.

Die Drehung kann in zwei oder mehreren Schritten vorgenommen werden, um mehr als die benachbarten Messstrahlen miteinander zu vergleichen. So können beispielsweise der übernächste oder noch weiter entfernte Messstrahlen miteinander verglichen werden. Insbesondere bei einer Vielzahl von angeordneten Messmodulen bzw. Distanzsensoren mit Messstrahlen können so unterschiedliche Messstrahlen miteinander verglichen werden. So können die Messstrahlen unterschiedlicher Messmodule bzw. Distanzsensoren der Reihe nach mit jeweils anderen Messmodulen bzw. Distanzsensoren verglichen werden. Die Mehrzahl von unterschiedlichen Messungen können auch untereinander verglichen werden, um eine weitere Plausibilisierung zu erreichen.

In Weiterbildung der Erfindung wird die Funktionsfähigkeit des Distanzsensors in mindestens einer Prüfpose des beweglichen Maschinenteils durch Vergleich eines gemessenen Abstandswertes mit einem Referenzwert getestet.

Die Funktionsfähigkeit des Distanzsensors wird in mindestens einer Prüfpose des beweglichen Maschinenteils überprüft oder getestet. Dieser Funktionstest betrifft vorzugsweise sämtliche Messstrahlen, gleichgültig ob sie von einem oder mehreren Distanzsensoren aufgespannt werden. Es wird verglichen, ob der gemessene Abstandswert einem Referenzwert entspricht, beispielsweise einem in einer Einlernfahrt gespeicherten Erwartungswert für den Abstandswert eines Messstrahls bei intaktem Distanzsensor. Referenzwert und Abstandsschwelle können identisch sein, müssen dies aber nicht. Insbesondere während einer Bewegung im freien Raum, aber auch sonst, kann eine Abstandsschwelle gesetzt sein, die kleiner ist als der Abstand zum nächsten Objekt oder Hintergrund in Messrichtung. Die Referenzwerte je Messstrahl können übereinstimmen oder voneinander abweichen, um beliebige Konturen abbilden zu können, auf die die Messstrahlen in der Prüfpose treffen.

In Weiterbildung der Erfindung wird das Testen der Funktionsfähigkeit über mehrere Prüfposen des beweglichen Maschinenteils verteilt.

Die Weiterbildung geht von dem Grundgedanken aus, den Funktionstest über mehrere Prüfposen des beweglichen Maschinenteils und damit des mitbewegten Distanzsensors zu verteilen. Eine jeweilige Prüfpose entspricht grundsätzlich einer Prüfposition ("Checkpoint"), so dass unterschiedliche Prüfposen durch unterschiedliche Prüfpositionen entstehen. Ebenso sind in derselben Prüfposition mehrere Prüfposen durch unterschiedliche Orientierung denkbar, insbesondere eine Drehung eines Endeffektors eines Roboterarms, beziehungsweise um die Mittenachse der Schutzglocke. Die Funktionsfähigkeit wird sukzessive über die mehreren Prüfposen getestet, schrittweise an unterschiedlichen Positionen und/oder in unterschiedlichen Orientierungen des beweglichen Maschinenteils. Erst in einer Gesamtbetrachtung über alle Prüfposen ist ein vollständiger Funktionstest gewährleistet.

In Weiterbildung der Erfindung ist mindestens eine Prüfpose in den Bewegungsablauf des Maschinenteils integriert.

Vorzugsweise gilt dies für sämtliche Prüfposen. Eine integrierte Prüfpose wird nicht eigens angefahren, sondern gehört zum produktiven Prozessablauf. Anders ausgedrückt wird die Prüfpose gleichsam im Vorüberfahren eingenommen, es ist eine Pose, die zum Arbeitsablauf gehört. Planung und Durchführung des Arbeitsablaufs muss keine Rücksicht auf die Prüfpose nehmen, die Maschine muss ihre Arbeit nicht unterbrechen, um die Prüfpose einzunehmen. Solche Prüfposen sind nicht unbedingt ideal für einen Funktionstest, aber durch den sukzessiven Funktionstest über mehrere Prüfposen kann dennoch verlässlich die Funktion des mindestens einen Distanzsensors gewährleistet werden.

Die Weiterbildung hat den Vorteil, dass eine Art In-situ-Funktionstest ermöglicht wird. Die für eine Sicherheitsanwendung notwendigen Testanforderungen werden so in den Bewegungsablauf eingebunden, dass dadurch keine oder nur minimale Einschränkungen oder Zusatzaufwände entstehen. Die Produktivität wird damit durch die Sicherheitsfunktion nicht oder kaum noch eingeschränkt. Entsprechend verringert sich der Konfigurationsaufwand. Die Testfrequenz kann deutlich erhöht und damit ein höheres Sicherheitsniveau erreicht werden (beispielsweise Performance Level nach der Sicherheitsnorm DIN EN ISO 13849). Die Anforderungen an die Umgebungscharakteristik werden geringer. Anders als am herkömmlichen Checkpoint sind in den Prüfposen keine Voraussetzungen wie eine flache oder wenigstens charakteristische Referenzkontur mit Möglichkeit zum Testen aller Messstrahlen gestellt, was sich nochmals günstig auf die flexible Einsatzmöglichkeit und den Konfigurationsaufwand auswirkt.

Ein Nachweis der Funktionsfähigkeit des mindestens einen Distanzsensors bedeutet, sofern nichts anderes gesagt, dass alle Messstrahlen getestet werden. Damit wiederum sind vorzugsweise die sicherheitsrelevanten Messstrahlen gemeint. Sicherheitsrelevant sind grundsätzlich sämtliche Messstrahlen, sofern nicht ausnahmsweise aus dem Sicherheitskonzept ausgenommen. Beispielsweise können Messstrahlen stummgeschaltet sein (Muting), das Gitter der Messstrahlen kann enger sein als erforderlich, oder der Ausfall einiger Messstrahlen wird von dem Sicherheitskonzept aus sonstigen Gründen verkraftet.

Bevorzugt wird in mindestens einer Prüfpose die Funktionsfähigkeit nur für einen Teil der Messstrahlen getestet. Das ist, obwohl das denkbar wäre, keine künstliche Beschränkung etwa zur Verringerung des Aufwands, vielmehr lässt die Prüfpose nicht zu, alle Messstrahlen zu testen, weil beispielsweise Messstrahlen in die Ferne gerichtet sind und keinen Abstandswert liefern, oder weil Messstrahlen stummgeschaltet sind und deshalb Eingriffe erlaubt sind, die zu unerwarteten Abstandsmesswerten führen, beziehungsweise der Ausfall der stummgeschalteten Messstrahlen momentan nicht sicherheitsrelevant wäre. Der Funktionstest in der Prüfpose bleibt folglich unvollständig. In der Praxis ist davon auszugehen, dass keine in den Bewegungsablauf des Maschinenteils integrierte Prüfpose für sich allein erlaubt, die Funktionsfähigkeit für sämtliche Messstrahlen zu überprüfen. Dafür müsste wie im Stand der Technik ein Prüfpunkt eigens angefahren werden, an dem mit einem Referenzziel für eine passende Umgebungscharakteristik gesorgt ist. Die Prüfposen ergänzen und überlappen einander in dem Sinne, dass erst in der Kombination alle Messstrahlen getestet werden. Dabei ist ein beliebiger Grad an Überlappung denkbar, so dass ein herausgegriffener Messstrahl in einer, mehreren oder allen Prüfposen getestet werden kann.

Mindestens eine Prüfpose wird vorzugsweise nur transient in der Bewegung des beweglichen Maschinenteils eingenommen. Vorzugsweise gilt dies für alle Prüfposen. Der Funktionstest erfolgt dynamisch im Durchlaufen der Prüfpose, in der nicht eigens verlangsamt oder gar angehalten wird. Der produktive Arbeitsablauf des beweglichen Maschinenteils wird kaum oder gar nicht beeinträchtigt. Natürlich ist umgekehrt möglich und sogar bevorzugt, Prüfposen innerhalb des Arbeitsablaufs auszuwählen, die sich für den Funktionstest besonders eignen, einschließlich der Möglichkeit einer langsamen oder vorübergehend angehaltenen Bewegung.

In mindestens einer Prüfpose wird bevorzugt keine zusätzliche Prüfbewegung ausgeführt. Vorzugsweise gilt dies für alle Prüfposen. Herkömmlich wird nicht nur ein Prüfpunkt gesondert angefahren, sondern das bewegliche Maschinenteil am Prüfpunkt noch auf das Referenzziel zubewegt, bis alle Messstrahlen eine Abstandsschwelle unterschreiten, wie dies in der einleitend genannten DE 10 2019 110 882 B4 erläutert wird. Diese Prüfbewegung würde den Arbeitsablauf des beweglichen Maschinenteils zusätzlich stören und kann entfallen. Es können jedoch Prüfposen in einer Annäherungsphase der ohnehin geplanten Bewegungsbahn gewählt werden, die Eigenschaften einer künstlichen Prüfbewegung aufweisen. Außerdem können in den Funktionstest unterstützende Bewegungen in den Arbeitsablauf eingeplant werden, die zu keiner spürbaren Verzögerung führen, wie beispielsweise eine unten noch näher erläuterte Drehung eines Endeffektors, um andere Messstrahlen in eine günstige Position zu bringen.

Die Messstrahlen treffen bevorzugt in mindestens einer Prüfpose auf natürliche Konturen. Vorzugsweise gilt dies für alle Prüfposen. Natürliche Konturen sind solche, die in der Arbeitsumgebung der Maschine ohnehin vorgesehen sind. Es wird mit anderen Worten auf ein gesondertes Referenzziel wie im Stand der Technik verzichtet.

Die Funktionsfähigkeit des Distanzsensors wird bevorzugt zyklisch innerhalb jeweils eines Testzyklus' getestet, wobei insbesondere der Testzyklus vorgebbar ist. Innerhalb des Testzyklus' muss jeder Messstrahl beziehungsweise sicherheitsrelevante Messstrahl mindestens einmal getestet worden sein. Die Zykluszeit ist je nach gefordertem Sicherheitsniveau zu wählen, als rein beispielhafter Zahlenwert bei dreißig Minuten, wobei dieser Wert vorzugsweise durch den Planer oder das Sicherheitskonzept vorgegeben beziehungsweise parametriert werden kann.

Vorzugsweise wird eine sicherheitsgerichtete Reaktion der Maschine eingeleitet, wenn die Funktionsfähigkeit des Distanzsensors nicht nachgewiesen werden konnte, insbesondere nicht innerhalb einer Testzykluszeit. In diesem Fall ist davon auszugehen, dass mindestens ein Messtrahl beziehungsweise sicherheitsrelevanter Messstrahl ausgefallen ist. Damit kann die Sicherheitsfunktion nicht garantiert werden, und deshalb erfolgt zur Vermeidung übersehener Unfallgefahren eine sicherheitsgerichtete Reaktion. Aus den bisherigen Erläuterungen ist klar, dass der Schluss auf eine fehlende Funktionsfähigkeit erst gezogen werden kann, nachdem genügend Prüfposen durchlaufen und damit alle beziehungsweise alle sicherheitsrelevanten Messstrahlen getestet wurden.

Vorzugsweise wird Buch geführt, wann bezüglich eines jeweiligen Messstrahls zuletzt die Funktionsfähigkeit nachgewiesen wurde, insbesondere in Form von Zeitstempeln oder nach einer Testzykluszeit zurückgesetzten Flags. Buch führen bedeutet beispielsweise, entsprechende Informationen in einem Speicher abzulegen, etwa als eine Art Matrix mit mindestens einer Zeitinformation je Messstrahl. Durch den auf mehrere Prüfposen verteilten Funktionstest werden Messstrahlen zu unterschiedlichen Zeiten getestet. Es darf also keineswegs erwartet werden, dass alle Messtrahlen gleichzeitig ihre fehlerfreien Funktionen nachweisen. Insbesondere kann eine bestimmte Prüfpose über eine gewisse Phase im Arbeitsablauf der Maschine nicht eingenommen worden sein, und dies war für einen Messstrahl womöglich die einzige, an der dessen Überprüfungen möglich wäre. Deshalb werden Informationen über die Funktionsüberprüfung der einzelnen Messstrahlen gesammelt. Eine Möglichkeit ist, einen Zeitstempel des jeweils letzten Funktionstests zu speichern. Keiner dieserZeitstempel darf dann älter sein als eine Testzykluszeit. Eine andere Implementierung sieht für jeden Messstrahl ein Flag vor, das zu Beginn eines Testzyklus' zurückgesetzt und bei erfolgreichem Test für den Messstrahl umgeschaltet wird. Spätestens nach der Testzykluszeit, vor dem nächsten Zurücksetzen, müssen alle Flags umgeschaltet sein. Ist das nicht der Fall, so wird vorzugsweise eine sicherheitsgerichtete Reaktion ausgelöst, ebenso wie wenn ein Zeitstempel des jüngsten erfolgreichen Funktionstest eines Messstrahls zu alt ist.

Das bewegliche Maschinenteil kann vorzugsweise mindestens eine Prüfpose mindestens zeitweise einnehmen, ohne dass in der Prüfpose die Funktionsfähigkeit getestet wird. Vorzugsweise gilt dies für alle Prüfposen. Mit anderen Worten darf eine Prüfpose von dem beweglichen Maschinenteil mindestens gelegentlich ohne Beitrag zu einem Funktionstest durchlaufen werden. Das gilt insbesondere dann, wenn der Arbeitszyklus schneller ist als ein Testzyklus. Ein anderes Beispiel ist, dass es einen größeren Pool an Prüfposen gibt als für den Test sämtlicher beziehungsweise sämtlicher sicherheitsrelevanter Messstrahlen erforderlich, so dass die Unterkombination an Prüfposen variabel ist, die zu einer sukzessiven Überprüfung der Funktionsfähigkeit des mindestens einen Distanzsensors beitragen.

Vorzugsweise wird, sobald innerhalb eines Testzyklus' für alle Messstrahlen die Funktionsfähigkeit nachgewiesen wurde, bis zum Ende des Testzyklus' die Funktionsfähigkeit nicht mehr getestet. Sobald also in einem Testzyklus für alle beziehungsweise alle sicherheitsrelevanten Messstrahlen die Funktionsfähigkeit gesichert ist, kann die weitere Überprüfung bis zum Beginn des nächsten Testzyklus' ausgesetzt werden. Dies ist ein weiteres Beispiel dafür, dass Prüfposen eingenommen werden können, ohne dass die Funktionsfähigkeit von Messstrahlen getestet wird.

Der Distanzsensor ist vorzugsweise ein optoelektronischer Sensor, der insbesondere für eine Messung von Abständen mit einem Lichtlaufzeitverfahren ausgebildet ist. Solche Distanzsensoren können kostengünstig, leicht und kompakt gebaut werden und sind in der Lage, sicherheitsrelevante Eingriffe verlässlich zu erkennen. Alternative Technologien für einen berührungslosen Distanzsensor sind beispielsweise Radar oder Ultraschall.

In vorteilhafter Weiterbildung ist ein Absicherungssystem für eine Maschine mit einem beweglichen Maschinenteil vorgesehen, wobei das Absicherungssystem mindestens einen berührungslosen Distanzsensor sowie eine Steuer- und Auswertungseinheit zum Ausführen eines erfindungsgemäßen Verfahrens aufweist. Dabei ist die Auswertungsfunktionalität wahlweise im Sensor selbst oder in einem daran angeschlossenen System wie einer Sicherheitssteuerung oder auch einer nicht sicheren Steuerung oder sonstigen Recheneinheit implementiert, die dann durch Redundanz oder Tests abgesichert wird. Die Auswertungsfunktionalität kann auch auf den Sensor und externe Komponenten verteilt sein, wobei eine Maschinen- oder Robotersteuerung beitragen kann. Eine Implementierung außerhalb des Distanzsensors erleichtert die Aktualisierung und Anpassung an andere Anwendungen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Darstellung eines mit einem mitbewegten Schutzmantel abgesicherten Roboterarms;
- Fig. 2: eine Blockdarstellung eines Absicherungssystems mit mindestens einem Distanzsensor;
- Fig. 3: eine weitere Darstellung eines mit einem mitbewegten Schutzmantel abgesicherten Roboterarms im Querschnitt;
- Fig. 4: eine erläuternde Darstellung verschiedener Abstände und Bremswege bei der Absicherung eines Roboterarms mit einem mitbewegten Schutzmantel;
- Fig. 5: eine Darstellung einer Arbeits- oder Greifbewegung eines von einem mitbewegten Schutzmantel abgesicherten Roboterarms; und
- Fig. 6: eine Darstellung eines mit einem mitbewegten Schutzmantel abgesicherten Roboterarms in der Sondersituation an einer Kante.

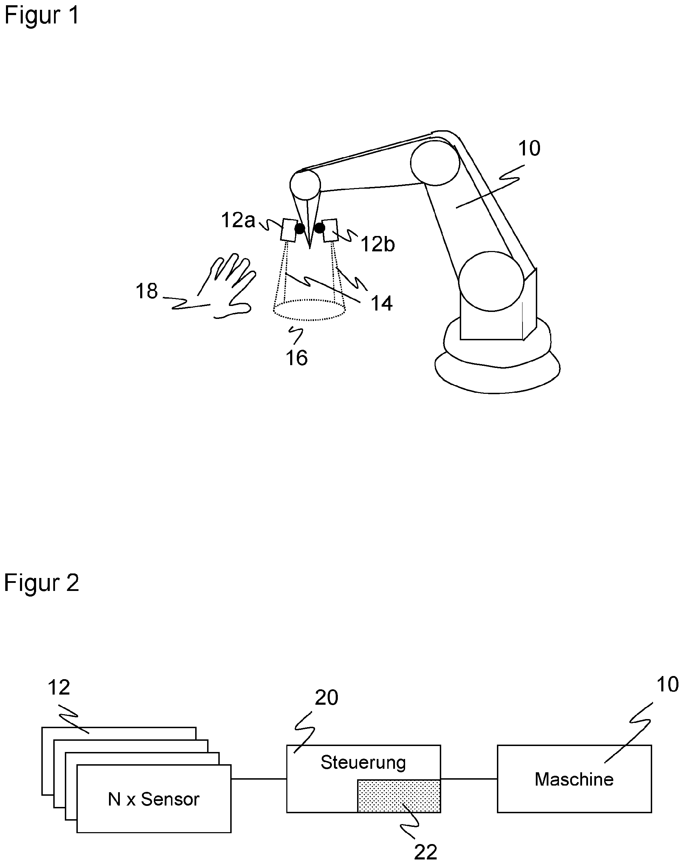

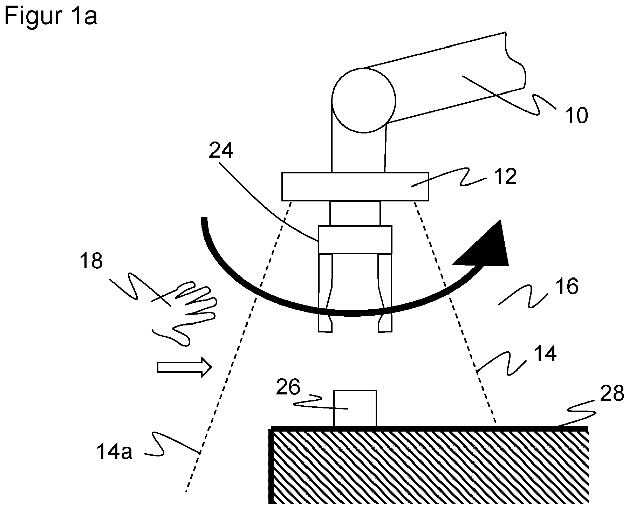

Figur 1 zeigt eine Darstellung eines abzusichernden Roboterarms 10, der mit einer Bedienperson zusammenarbeitet. Der Roboterarm 10 und die spezielle Anwendung sind Beispiele, und die nachfolgenden Erläuterungen sind auf andere abzusichernde bewegte Maschinen und Szenarien übertragbar, insbesondere AGVs/AGCs (Automated Guided Vehicle / Cart) oder Drohnen.

Zur Absicherung sind an dem Roboterarm 10 Distanzsensoren 12a-b angebracht, vorzugsweise in der Umgebung eines Werkzeugs zu dessen Absicherung (EOAS, End-of-Arm-Safeguarding). Die Distanzsensoren 12a-b bestimmen mehrere Abstandswerte längs jeweiliger Messstrahlen 14. Distanzsensoren 12a-b können einstrahlig oder mehrstrahlig sein, also einen oder mehrere Messstrahlen 14 und entsprechende Abstandswerte erzeugen. Es wird nicht weiter zwischen Ausführungsformen mit einem einzigen mehrstrahligen Distanzsensor, mehreren einstrahligen Distanzsensoren, mehrere mehrstrahlige Distanzsensoren oder einer beliebigen Kombination davon unterschieden. Für die Distanzmessung eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen, wie Triangulationstaster, Laserscanner und 2D- oder 3D-Kameras, ebenso wie ganz andere Technologien, etwa Ultraschallsensoren, kapazitive Sensoren, Radarsensoren und dergleichen.

Die Messstrahlen 14 bilden gemeinsam einen virtuellen Schutzmantel 16 um das Ende beziehungsweise Werkzeug des Roboterarms 10. Die Schutzfunktion wird mit dem Starten eines Ablaufprograms des Roboterarms 10 gestartet. Ab diesem Zeitpunkt wird somit das von dem Roboterarm 10 und dem daran angebrachten Werkzeug ausgehende Risiko signifikant verringert. Dazu werden während des Betriebs des Roboterarms 10 die von den Distanzsensoren 12a-b gemessenen Abstandswerte mit Abstandsschwellen verglichen. Wird anhand der gemessenen Abstandswerte und der Abstandsschwellen ein Körperteil oder sonstiges unzulässiges Objekt 18 in dem geschützten Bereich um das Werkzeug erkannt, so wird eine sicherheitsgerichtete Reaktion des Roboters 10 ausgelöst. Je nach Situation und Sicherheitskonzept wird der Roboterarm 10 durch ein Verlangsamen, Ausweichen oder einen Nothalt in einen sicheren Zustand versetzt.

Der Schutzmantel 16 hat im Beispiel der Figur 1 die Geometrie eines Kegelstumpfmantels. Allgemein ist der Schutzmantel 16 eine Fläche, möglicherweise auch ein Volumen, die einen sicherheitsrelevanten Zugangsbereich zu dem Roboterarm 10 beziehungsweise dessen Werkzeugspitze bildet. Im Beispiel des Roboterarms 10 besteht prinzipiell Zugang von allen seitlichen Richtungen, so dass der Schutzmantel 16 dann vorzugsweise eine geschlossene Fläche bildet. Der Schutzmantel 16 ist also vorzugsweise topologisch ein Zylindermantel, der aber aufgrund der Lage der Messstrahlen 14 im Raum verformt sein kann, etwa zu einem Kegelstumpf, einem Pyramidenstumpf oder einem Prisma. In anderen Anwendungen oder Situationen kann es auch Lücken zu bestimmten Seiten geben, von denen aus anderen, insbesondere mechanischen oder baulichen Gründen ein sicherheitsrelevanter Eingriff ausgeschlossen ist.

Figur 1a zeigt ein Verfahren zum Absichern eines beweglichen Maschinenteils einer Maschine, insbesondere eines Roboterarms 10, wobei von mindestens einem mit dem Maschinenteil mitbewegten berührungslosen Distanzsensor 12 längs mehrerer Messstrahlen 14 je ein Abstandswert gemessen wird und die gemessenen Abstandswerte mit mindestens einer Abstandsschwelle verglichen werden, um zu entscheiden, ob eine sicherheitsgerichtete Reaktion der Maschine eingeleitet wird, wobei die Funktionsfähigkeit des Distanzsensors 12 durch Vergleich eines gemessenen Abstandswertes mit einem Referenzwert getestet wird, wobei das bewegliche Maschinenteil und mit ihm der Distanzsensor 12 in eine andere Orientierung gedreht wird, um die Funktionsfähigkeit für andere Messstrahlen testen zu können.

Figur 2 zeigt eine Blockdarstellung eines erfindungsgemäßen Absicherungssystems. Ein oder mehrere Distanzsensoren 12 sind wie in Figur 1 gezeigt mit dem abzusichernden Maschinenteil, der hier etwas abstrakter statt eines Roboterarms genannten Maschine 10 mitbewegt, um es durch den Schutzmantel 16 gegen Eingriffe abzusichern und so Unfälle und Verletzungen zu vermeiden. Bei den Distanzsensoren 12 handelt es sich vorzugsweise um optoelektronische Sensoren nach dem Lichtlaufzeitprinzip insbesondere auf Basis von SPAD-Empfängern (Single-Photon Avalanche Diode), aber auch andere gleichartige oder gemischt verwendete Sensoren aus den oben angeführten Beispielen sind denkbar.

Die Abstandswerte werden an eine Steuerung 20 weitergegeben, die unter anderem für die hier betrachteten Sicherheitsauswertungen 22 zuständig ist und die erforderlichenfalls ein sicheres Signal an die Maschine 10 beziehungsweise deren Steuerung ausgibt, um eine Sicherheitsreaktion auszulösen und beispielsweise die Arbeitsgeschwindigkeit der Maschine 10 anzupassen oder diese anzuhalten. Die Steuerung 20 ist separat von der Maschine 10 gezeigt, ihre Funktion kann aber ebenso zumindest teilweise von einer Roboter- beziehungsweise Maschinensteuerung übernommen werden. Umgekehrt können die Sicherheitsauswertungen 22 auch in einem der Distanzsensoren 12 untergebracht sein, oder die Auswertungsfunktionalität wird nahezu beliebig über Distanzsensor 12 und Steuerung 20 verteilt. Die Steuerung 20 kann dafür ausgelegt sein, Informationen der Maschine 10 zu empfangen, beispielsweise Positionen oder Posen eines Roboterarms. Die Sicherheitsfunktionalität kann als Hardwarebaustein, Softwarepaket, App oder in jeder sonst geeigneten Form implementiert sein. Die Steuerung 20 ist vorzugsweise eine Sicherheitssteuerung, alternativ kommt aber auch eine andere Hardware in Betracht, wie ein Mikrocontroller, ein Computer, ein PLC (programmable logic controller), die Roboter- oder Maschinensteuerung, eine Edge-Computing-Infrastruktur oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietauglicher Standard.

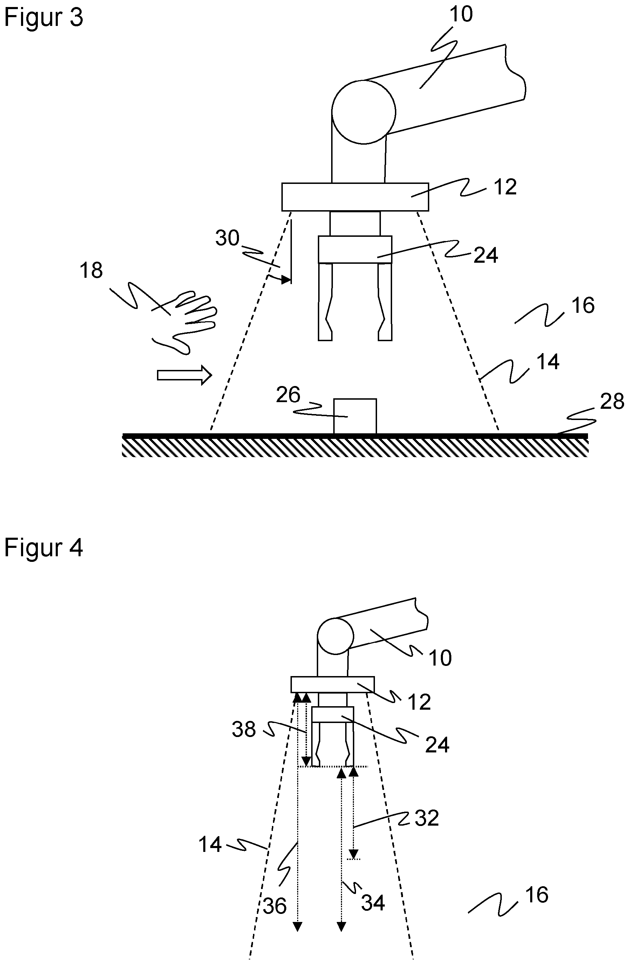

Figur 3 zeigt eine Absicherung des Roboterarms 10 vergleichbar mit Figur 1 nochmals in einer Schnittdarstellung. Die Sicherheitseinrichtung mit dem Distanzsensor 12 oder den mehreren Distanzsensoren 12a-b ist am distalen Ende des Roboterarms 10 in der Nähe von dessen Endeffektor angebracht, der hier beispielhaft als Greifer 24 ausgeführt ist. Dessen beispielhafte Aufgabe ist es, ein Werkstück 26 zu greifen, das sich auf einer Arbeitsoberfläche 28 befindet, die für die Messstrahlen 14 einen Hintergrund bildet. Die Messstrahlen 14 umhüllen den Greifer 24 und sichern ihn so als Schutzmantel 16 ab. Beispielsweise sind dafür Distanzsensoren ringförmig angeordnet. Deren Messstrahlen 14 können einen Anstellwinkel 30 aufweisen.

Während der Arbeitsbewegung des Roboterarms 10 befindet sich der Distanzsensor 12 für alle Zeitpunkte (t) in reproduzierbarem Abstand zu dem Hintergrund. Dadurch lassen sich Erwartungswerte für die von den Messstrahlen 14 gemessenen Abstandswerte ableiten oder anlernen, beispielsweise während einer Referenzfahrt durch den späteren Bewegungsablauf des Roboterarms 10. Jeder Zeitpunkt (t) korrespondiert mit einer Roboterpose, und die Erwartungswerte zumindest in bestimmten Roboterposen können zusätzlich oder alternativ für einen noch zu erläuternden Funktionstest des Distanzsensors 12 verwendet werden. Dringt nun ein Objekt 18 in den Schutzmantel 16 ein, so wird mindestens ein Messstrahl 14 einen von der Erwartung abweichenden Abstandswert messen. Bei diesem Konzept reicht der Schutzmantel 16 quasi immer bis zum Hintergrund, die Abstandsschwellen, mit denen verglichen wird, sind dynamisch. Das ist nicht in allen Situationen angemessen, sondern insbesondere nur während einer eigentlichen Arbeitsbewegung. In anderen Phasen genügt es, feste Abstandsschwellen zu wählen, die dann einen Schutzmantel einer festen Länge definieren. Wird auf die eine oder andere Weise ein unzulässiges Objekt 18 in dem durch den Schutzmantel 16 abgesicherten Bereich detektiert, so erfolgt eine sicherheitsgerichtete Reaktion. Wie zu Figur 2 ausgeführt, kann die entsprechende Auswertung in der Sicherheitseinrichtung mit dem Distanzsensor 12 selbst getroffen werden, oder es werden nur Abstandswerte ausgegeben und der Robotersteuerung beziehungsweise einer zwischengeschalteten Steuerung 20 übergeben.

Figur 4 zeigt eine Darstellung ähnlich Figur 3 zu Erläuterungen verschiedener Abstände und Bremswege. Bei der Absicherung während der Annäherung an ein Werkstück 26 beziehungsweise eine Arbeitsoberfläche 28 ist der notwendige Bremsweg 32 ein entscheidendes Kriterium, da der Roboterarm 10 vor Erreichen des Objektes zum Stillstand gebracht werden soll. Der Bremsweg 32 hängt vom Bremsvermögen des Roboterarms 10, der Last, der Geschwindigkeit, der Achsstellung und weiteren Parametern ab. Die Robotersteuerung muss den Bremsweg 32 einhalten, dieser Bremsweg 32 würde einem sicheren Stopp entsprechen. Ein weiterer Parameter ist der zur Verfügung stehende freie Weg 34, der immer größer als der Bremsweg 32 sein sollte. Um eine kontinuierliche Bewegung des Roboterarms 10 zu erreichen, kann bei einer Verringerung des zur Verfügung stehenden freien Weges 34 eine Begrenzung der Geschwindigkeit erfolgen. Damitverkürzt sich der notwendige Bremsweg 32. Darum kann der zur Verfügung stehende freie Weg 34 an die Robotersteuerung übertragen werden, die dann stets die optimale Geschwindigkeit des Prozessschrittes automatisch wählen kann, um eine Quetschgefahr zwischen Roboterarm 10 und Werkstück 26 oder Arbeitsoberfläche 28 zu vermeiden.

Der jeweilige Abstand 36 zum Hintergrund kann aus den um den Anstellwinkel 30 korrigierten Abstandswerten bestimmt werden. Hiervon ist eine Länge 38 des Werkzeugs beziehungsweise Greifers 24 abzuziehen, vorzugsweise samt einer Sicherheitsmarge und möglicherweise einem Werkstückanteil, um den zur Verfügung stehenden freien Weg 34 zu bestimmen. Die Bestimmung des freien Weges 34 kann wie alle Auswertungen alternativ in der Sicherheitseinrichtung mit dem Distanzsensor 12, der Steuerung 20 oder der Robotersteuerung erfolgen.

Die Bestimmung korrekter Abstandswerte hat einen erheblichen Einfluss auf die Sicherheitsfunktion und muss deshalb gewährleistet sein. Daraus ergeben sich hohe Anforderungen an die Qualität in den Prozessen der Entwicklung, Herstellung sowie Wartung. Ungeachtet dessen bedarf es einer permanenten Überwachung im Betrieb. Erfindungsgemäß erfolgt dies über einen vorzugsweise zyklisch durchgeführten Funktionstest, um die sich daraus ergebenen Risiken angemessen zu minimieren. Zu den mögliche Fehlerfällen, die dabei erkannt werden müssen sind, zählen unter anderem zufällige Messfehler, Übertragungsfehler, Verzögerungen bei der Messung oder Stuck-At-Fehler, bei denen unabhängig von der tatsächlichen Situation nur noch stets derselbe Abstandsmesswert ausgegeben wird. Bevor der erfindungsgemäße Funktionstest im Detail erläutert wird, sollen zunächst vorbereitend verschiedene Phasen des Arbeitsablaufs des Roboterarms 10 betrachtet werden.

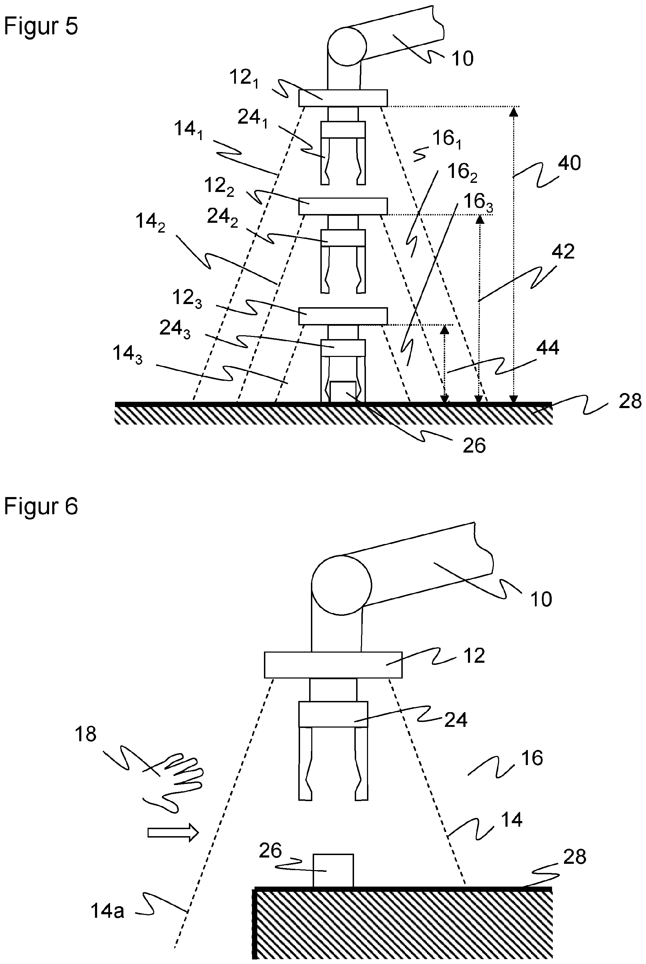

Figur 5 illustriert verschiedene Stellungen oder Posen des Roboterarms während einer Arbeits- oder Greifbewegung. Im Arbeitsablauf oder in der Bewegung des Roboterarms 10 können aus Sicht der Absicherung mit dem Distanzsensor 12 verschiedene Zustände unterschieden werden. Während einer Bewegung im freien Raum ist der Hintergrund beziehungsweise die Arbeitsoberfläche mit dem Werkstück 26 weit entfernt. Eine Quetschgefahr besteht solange nicht. Der Schutzmantel 16 kann auf eine feste Länge beschränkt werden oder unter Umständen gar nicht überwacht werden. Möglicherweise befindet sich der Hintergrund für zumindest einige Messstrahlen 14 sogar außerhalb des Distanzmessbereichs. Die Bewegung im freien Raum ist in Figur 5 nicht gezeigt.

Der bereits mehrfach angesprochene Funktionstest des Distanzsensors 12 findet in einer Prüfpose statt, oder vielmehr in mehreren Prüfposen, wie noch ausgeführt wird. In Figur 5 wird ein Prüf- oder Checkpunkt in einem Abstand 40 erreicht, die Bezugszeichen für diesen Zustand sind mit einer tiefgestellten Eins gekennzeichnet. An dem Prüfpunkt werden die gemessenen Abstandswerte mit zuvor eingelernten Referenzwerten verglichen. Stimmt dies nicht überein, so wird dies als Fehlfunktion des Distanzsensors 12 erkannt. Das ist nicht zwingend sofort sicherheitskritisch, etwa wenn die Abweichung nur kurzzeitig oder in einem nicht sicherheitsrelevanten Messstrahl 14 vorliegt, der beispielsweise stummgeschaltet ist. Wenn aber tatsächlich von einer Fehlfunktion auszugehen ist, erfolgt eine sicherheitsgerichtete Reaktion, da die Absicherung nicht länger verlässlich gewährleistet werden kann. Die Abweichung könnte alternativ durch einen Eingriff eines Objekts 18 verursacht sein, aber die sicherheitsgerichtete Reaktion ist dann ebenso angemessen. Herkömmlich gibt es feste Prüfpunkte, die eigens angefahren werden, erfindungsgemäß wird dies in den produktiven Bewegungsablauf eingebunden. Dafür können regelmäßig nicht alle Messstrahlen 14 in derselben Prüfpose getestet werden, so dass der Funktionstest auf mehrere Prüfposen verteilt wird.

In einem Abstand 42 wird in Figur 5 ein Umschaltpunkt erreicht. Die Bezugszeichen für diesen Zustand sind mit einer tiefgestellten Zwei gekennzeichnet. Ab dem Umschaltpunkt erfolgt eine kontrollierte Annäherung an die zu prozessierende Stelle beziehungsweise das Werkstück 26 und damit die Arbeitsoberfläche 28, um beispielsweise das Werkstück 26 zu greifen oder auf andere Art damit zu interagieren. Geschwindigkeit und damit auch der Bremsweg 32 werden hier vorzugsweise reduziert oder dynamisch entsprechend dem freien Weg 34 angepasst. Wie viele andere Posen des Roboterarms 10 kann auch der Umschaltpunkt eine der erfindungsgemäß verwendeten Prüfposen sein. Die geordnete Abfolge erst Prüfpunkt und dann Umschaltpunkt der Figur 5 ist demnach rein beispielhaft zu verstehen.

In einem Abstand 44 wird in Figur 5 ein Prozesspunkt erreicht. Die Bezugszeichen für diesen Zustand sind mit einer tiefgestellten Drei gekennzeichnet. Hier hat sich der Roboterarm 10 so weit an das Werkstück 26 angenähert, dass das Werkzeug beziehungsweise der Greifer 24 einen Prozessschritt ausführt. Prinzipiell kann auch der Prozesspunkt eine Prüfpose sein, das ist aber wegen Wechselwirkungen des Prozessschritts mit der Abstandsmessung nicht unbedingt eine gute Wahl.

Wie schon erläutert, basiert das Prinzip der Sicherheitseinrichtung mit dem Distanzsensor 12, zumindest vorzugsweise in den Phasen oder Zuständen gemäß Figur 5 außerhalb einer Bewegung im freien Raum, auf dem Vergleich der aktuell bestimmten Abstandswerte mit den aus der jeweiligen Pose zum Zeitpunkt (t) definierten angelernten, konfigurierten oder simulierten Referenzwerten. Weichen Abstands- und Referenzwert um mehr als eine definierte Toleranz voneinander ab, und dies vorzugsweise nicht nur ganz kurzzeitig und/oder mit minimaler Ausdehnung, ist von einem Objekteingriff oder einer Fehlfunktion auszuzugehen.

Es ist vergleichsweise einfach, den zyklischen Funktionstest für alle Messstrahlen 14 sicherzustellen, wenn wie herkömmlich ein spezieller Prüfpunkt angefahren und dort womöglich noch eine spezielle Prüfbewegung ausgeführt wird. Dort kann durch ein Referenzziel sichergestellt werden, dass jeder Messstrahl 14 eine angemessene Testumgebung vorfindet. Das ist jedoch für den Arbeitsablauf des Roboterarms 10 sehr nachteilig, weil ein zusätzlicher Bereich und zusätzliche Bewegungen notwendig werden. Außerdem ist es vorteilhaft, wenn Abstandswerte zu natürlichen Szeneriemerkmalen gemessen und verglichen werden, wie zu der Arbeitsfläche 28, statt ein gesondertes Referenzziel unterbringen zu müssen.

Erfindungsgemäß werden die Prüfposen in den normalen Prozess oder Arbeitsablauf des Roboterarms 10 integriert. Die in Figur 5 illustrierte Annäherungsbewegung ist ein Beispiel, wann geeignete Prüfposen eingenommen werden, die auf der Bewegungsbahn des produktiven Betriebs des Roboterarms 10 liegen. Der Funktionstest erfolgt je nach Ausführungsform und Prüfpose im Stopp oder Durchlauf. Eine jeweilige Übereinstimmung des Abstandswertes mit dem für die Prüfpose hinterlegten Referenzwert wird als erfolgreich bestandener Test für den jeweiligen Messstrahl 14 gewertet. Die jeweils eingenommene Prüfpose, d.h. die Stellung des Roboterarms 10 zum Zeitpunkt (t), sowie die Referenzwerte sind aus dem Arbeitsablauf des Roboterarms 10 bekannt oder eingelernt.

Der Funktionstest wird auf mehrere Prüfposen während derselben oder aufeinanderfolgender Arbeitsabläufe des Roboterarms verteilt und wiederholt. In einer einzigen Prüfpose können regelmäßig nicht alle Messstrahlen 14 getestet werden. Das liegt daran, dass die Prüfposen in den Arbeitsablauf integriert sind und nicht wie herkömmlich künstlich eine passende Testumgebung geschaffen werden kann. Beispielsweise ist in einer Prüfpose ein zumindest teilweise unpassender Hintergrund vorhanden, oder ein Distanzsensor beziehungsweise mindestens ein Messtrahl 14 kann stummgeschaltet werden (Muting). Über mehrere Prüfposen hinweg ergibt sich jedoch für alle Messstrahlen 14 eine Testmöglichkeit, und so wird sukzessive der Funktionstest vervollständigt. Dies kann, wie später erläutert, noch durch Manipulation einer Prüfpose, insbesondere Drehungen des Werkzeugs beziehungsweise Greifers 24 unterstützt werden, ohne den Arbeitsablauf zu beeinträchtigen.

Figur 6 zeigt beispielhaft eine für einen Funktionstest ungünstige Situation, in der wegen einer Tischkante beziehungsweise am Rand der Arbeitsoberfläche 28 einige Messstrahlen 14a in die Ferne beziehungsweise ins Leere gerichtet sind und deshalb nicht getestet werden können. Ähnliche Probleme ergeben sich, wenn der Distanzsensor 12 schräg statt senkrecht nach unten ausgerichtet ist. Den betroffenen Messstrahlen 14 fehlt ein sinnvoller Referenzwert. Möglicherweise findet sich im weiteren Arbeitsablauf eine komplementäre Situation, in der diese Messstrahlen 14 doch auf einen Hintergrund treffen und getestet werden können.

Eine andere Möglichkeit ist, zusätzliche Prüfposen zu erzeugen, um doch alle Messstrahlen 14 zu testen. Bei einem omnidirektionalen Greifer 24 besteht die Möglichkeit, ihn zu drehen. Ein Zweibackengereifer kann ebensogut um 180° gedreht zugreifen, insbesondere alternierend bei aufeinanderfolgenden Greifbewegungen um 180° gedreht und nicht gedreht werden. Ebenso sind andere Drehwinkel möglich, wenn dies mit dem Greifer 24, der Greifstrategie und dem Werkstück 26 möglich ist. Ein Quader wäre also auch mit 90° Drehungen greifbar, stehende Zylinder in beliebigen Winkelstellungen. Ähnliche Drehsymmetrien gibt es bei anderen Werkzeugen. Die Drehung verändert den Schutzmantel 16 nicht, sehr wohl aber die Anordnung der Messstrahlen 14 innerhalb des Schutzmantels 16. Dadurch steht der Hintergrund für zuvor ungetestete Messstrahlen 14 zur Verfügung. Die Referenzwerte müssen dabei passend zu den vertauschten Messstrahlen 14 zugeordnet werden.

Der Bewegungsablauf kann prinzipiell in einer Prüfposition angehalten werden, insbesondere um durch Drehung in derselben Prüfposition weitere Prüfposen zu erzeugen. So können bisher ungetestete Messstrahlen 14, notfalls sogar einzeln, auf einen geeigneten Hintergrund ausgerichtet werden. Damit wird der Bewegungsablauf nur minimal verändert. Vorzugsweise findet die Drehung aber schon vorbereitend statt, ehe die Prüfposition erreicht ist, und andere Drehstellungen für diese Prüfposition werden in einer späteren Wiederholung des Ablaufs eingestellt. So wird zwar der Arbeitsablauf modifiziert, dies aber bei gleicher Produktivität. Es ist denkbar, die Konfigurationsmöglichkeiten des Roboterarms 10 und der Sicherheitseinrichtung mit dem Distanzsensor 12 zu erweitern, um je nach Anwendung die Ausführungsform zu wählen und die Prüfposen zu integrieren, die optimal zu den individuellen Anforderungen passen.

Bei der Annäherung an den Prozesspunkt an einer Kante gemäß Figur 6 kann es zusätzlich noch zu Kantentreffern der Messstrahlen 14 kommen. Das hat die unangenehme Konsequenz, dass fehlerhaft zu große Abstandswerte entstehen können. Solche Abstandswerte sind für den Funktionstest nicht geeignet und müssen darum ausgeblendet werden. Für die Schutzfunktion hingegen ist zu prüfen, ob diese Abstandswerte mindestens den erforderlichen Referenzabstand einhalten. Im anderen Fall ist von einem Objekteingriff in den Schutzmantel auszugehen.

Da erfindungsgemäß nicht mehr sämtliche Messstrahlen 14 zugleich in einem Prüfpunkt getestet werden, sollte eine Matrix oder eine sonstige Repräsentation gespeichert werden, welche Messstrahlen 14 zu welchen Zeiten erfolgreich getestet wurden. Für einen insgesamt erfolgreichen Funktionstest sollte für alle Messstrahlen 14 innerhalb einer Zykluszeit die korrekte Funktion bestätigt werden. Die Zykluszeit hängt von dem zu erzielenden Sicherheitsniveau beziehungsweise der konkreten Gefährdungsanalyse ab. Sie beträgt rein beispielhaft dreißig Minuten und kann auch einstellbar sein.

Eine Implementierungsmöglichkeit speichert für den jeweiligen Messstrahl 14 einen Zeitstempel, wann zuletzt ein Funktionstest dieses Messstrahls 14 erfolgreich war. Eine zweite Funktion überwacht, ob alle Zeitstempel jünger sind als eine der Zykluszeit entsprechende Verfallszeit. Eine alternative Implementierung basiert auf je einem Flag pro Messstrahl 14. Diese Flags werden mit einer der Zykluszeit entsprechenden Periode zurückgesetzt oder gelöscht. Bei einem erfolgreichen Test eines Messstrahls 14 wird dessen Flag auf "erfolgreich" umgeschaltet. Spätestens nach der Zykluszeit müssen alle Flags gesetzt sein, d.h. der zugehörige Messstrahl 14 hat minimal einen Test erfolgreich bestanden. Ein zu alter Zeitstempel oder ein nicht gesetztes Flag führt zum Scheitern des Funktionstests und somit einer sicherheitsgerichteten Reaktion aufgrund eines möglichen oder vermuteten Sensordefekts.

### Bezugszeichenliste:

10 Roboterarm/Maschine
12 Distanzsensoren
12a-b Distanzsensoren
14, 14a Messstrahlen
16 Schutzmantel
18 Objekt
20 Steuerung
22 Sicherheitsauswertungen
24 Greifer
26 Werkstück
28 Arbeitsoberfläche
30 Anstellwinkel
32 Bremsweg
34 freier Weg
36 Abstand
38 Länge
40 Abstand

## Patentansprüche

1. Verfahren zum Absichern eines beweglichen Maschinenteils einer Maschine (10), insbesondere eines Roboterarms, wobei von mindestens einem mit dem Maschinenteil mitbewegten berührungslosen Distanzsensor (12) längs mehrerer Messstrahlen (14) je ein Abstandswert gemessen wird und die gemessenen Abstandswerte mit mindestens einer Abstandsschwelle verglichen werden, um zu entscheiden, ob eine sicherheitsgerichtete Reaktion der Maschine (10) eingeleitet wird, wobei die Funktionsfähigkeit des Distanzsensors (12) durch Vergleich eines gemessenen Abstandswertes mit einem Referenzwert getestet wird,
**dadurch gekennzeichnet,**
**dass** das bewegliche Maschinenteil und mit ihm der Distanzsensor (12) in eine andere Orientierung gedreht wird, um die Funktionsfähigkeit für andere Messstrahlen (14) testen zu können, wobei die Drehung in eine andere Orientierung der eigentlichen Arbeitsbewegung überlagert wird.

2. Verfahren nach Anspruch 1,
wobei vor dem oder während eines Einlernens das bewegliche Maschinenteil so gedreht wird, dass sich zwei Messmodule vor und nach der Drehung jeweils in derselben Position befinden.

3. Verfahren nach Anspruch 1,
wobei das bewegliche Maschinenteil in der anderen Orientierung einen Arbeitsschritt weiterhin ausführen kann, insbesondere nach Drehung ein Objekt (26) greifen oder bearbeiten.

4. Verfahren nach Anspruch 1, wobei die Drehung in eine andere Orientierung in verschiedenen Messreichweiten durchgeführt wird.

5. Verfahren nach Anspruch 1, wobei die Drehung in eine andere Orientierung in zwei oder mehreren Schritten vorgenommen wird.

6. Verfahren nach Anspruch 1, wobei die Funktionsfähigkeit des Distanzsensors (12) in mindestens einer Prüfpose des beweglichen Maschinenteils durch Vergleich eines gemessenen Abstandswertes mit einem Referenzwert getestet wird.

7. Verfahren nach Anspruch 1, wobei das Testen der Funktionsfähigkeit über mehrere Prüfposen des beweglichen Maschinenteils verteilt wird.

8. Verfahren nach Anspruch 1, wobei mindestens eine Prüfpose in den Bewegungsablauf des Maschinenteils integriert ist.

9. Verfahren nach Anspruch 1,
wobei in mindestens einer Prüfpose die Funktionsfähigkeit nur für einen Teil der Messstrahlen (14) getestet wird.

10. Verfahren nach Anspruch 1 oder 2,
wobei mindestens eine Prüfpose nur transient in der Bewegung des beweglichen Maschinenteils eingenommen wird.

11. Verfahren nach einem der vorhergehenden Ansprüche,
wobei in mindestens einer Prüfpose keine zusätzliche Prüfbewegung ausgeführt wird.

12. Verfahren nach einem der vorhergehenden Ansprüche,
wobei die Messstrahlen (14) in mindestens einer Prüfpose auf natürliche Konturen treffen.

13. Verfahren nach einem der vorhergehenden Ansprüche,
wobei die Funktionsfähigkeit des Distanzsensors (12) zyklisch innerhalb jeweils eines Testzyklus' getestet wird, wobei insbesondere der Testzyklus vorgebbar ist.

14. Verfahren nach einem der vorhergehenden Ansprüche,
wobei eine sicherheitsgerichtete Reaktion der Maschine (10) eingeleitet wird, wenn die Funktionsfähigkeit des Distanzsensors (12) nicht nachgewiesen werden konnte, insbesondere nicht innerhalb einer Testzykluszeit.

15. Verfahren nach einem der vorhergehenden Ansprüche,
wobei Buch geführt wird, wann bezüglich eines jeweiligen Messstrahls (14) zuletzt die Funktionsfähigkeit nachgewiesen wurde, insbesondere in Form von Zeitstempeln oder nach einer Testzykluszeit zurückgesetzten Flags.

16. Verfahren nach einem der vorhergehenden Ansprüche,
wobei das bewegliche Maschinenteil mindestens eine Prüfpose mindestens zeitweise einnehmen kann, ohne dass in der Prüfpose die Funktionsfähigkeit getestet wird.

17. Verfahren nach einem der vorhergehenden Ansprüche,
wobei, sobald innerhalb eines Testzyklus' für alle Messstrahlen (14) die Funktionsfähigkeit nachgewiesen wurde, bis zum Ende des Testzyklus' die Funktionsfähigkeit nicht mehr getestet wird.

18. Verfahren nach einem der vorhergehenden Ansprüche,
wobei der Distanzsensor (12) ein optoelektronischer Sensor ist, der insbesondere für eine Messung von Abständen mit einem Lichtlaufzeitverfahren ausgebildet ist.

19. Absicherungssystem (12, 20) für eine Maschine (10) mit einem beweglichen Maschinenteil, wobei das Absicherungssystem (12, 20) mindestens einen berührungslosen Distanzsensor (12) sowie eine Steuer- und Auswertungseinheit (12, 20, 10) zum Ausführen eines Verfahrens nach einem der vorhergehenden Ansprüche aufweist.

## Claims

1. A method of safeguarding a movable machine part of a machine (10), in particular of a robot arm, wherein a respective distance value is measured along a plurality of measurement beams (14) by at least one contactless distance sensor (12) moved along with the machine part and the measured distance values are compared with at least one distance threshold to decide whether a safety related response of the machine (10) is initiated, with the functionality of the distance sensor (12) being tested by comparison of a measured distance value with a reference value,
**characterized in that**
the movable machine part, and with it the distance sensor (12), is rotated in a different orientation to be able to test the functionality for other measurement beams (14), with the rotation in a different orientation being superposed on the actual work movement.

2. A method in accordance with claim 1,
wherein the movable machine part is rotated before or during a teaching such that two measurement modules are respectively located in the same position before and after the rotation.

3. A method in accordance with claim 1,
wherein the movable machine part in the different orientation can still perform a workstep, in particular grip or process an object (26) after rotation.

4. A method in accordance with claim 1, wherein the rotation in a different orientation is carried out in different measurement ranges.

5. A method in accordance with claim 1, wherein the rotation in a different orientation is carried out in two or more steps.

6. A method in accordance with claim 1, wherein the functionality of the distance sensor (12) is tested in at least one test pose of the movable machine part by comparison of a measured distance value with a reference value.

7. A method in accordance with claim 1, wherein the testing of the functionality is distributed over a plurality of test poses of the movable machine part.

8. A method in accordance with claim 1, wherein at least one test pose is integrated in the movement routine of the machine part.

9. A method in accordance with claim 1,
wherein the functionality is only tested for some of the measurement beams (14) in at least one test pose.

10. A method in accordance with claim 1 or claim 2,
wherein at least one test pose is only adopted transiently in the movement of the movable machine part.

11. A method in accordance with any one of the preceding claims,
wherein no additional test movement is carried out in at least one test pose.

12. A method in accordance with any one of the preceding claims,
wherein the measurement beams (14) impinge on natural contours in at least one test pose.

13. A method in accordance with any one of the preceding claims,
wherein the functionality of the distance sensor (12) is tested cyclically within a respective test cycle, with the test cycle in particular being predefinable.

14. A method in accordance with any one of the preceding claims,
wherein a safety related response of the machine (10) is initiated when the functionality of the distance sensor (12) was not able to be demonstrated, in particular not within a test cycle time.

15. A method in accordance with any one of the preceding claims,
wherein an account is kept of when the functionality was last demonstrated with respect to a respective measurement beam (14), in particular the form of time stamps or of flags reset after a test cycle time.

16. A method in accordance with any one of the preceding claims,
wherein the movable machine part can adopt at least one test pose at least at times without the functionality being tested in the test pose.

17. A method in accordance with any one of the preceding claims,
wherein, as soon as the functionality has been demonstrated for all the measurement beams (14) within a test cycle, the functionality is no longer tested until the end of the test cycle.

18. A method in accordance with any one of the preceding claims,
wherein the distance sensor (12) is an optoelectronic sensor that is in particular configured for a measurement of distances using a time of flight process.

19. A safeguarding system (12, 20) for a machine (10) having a movable machine part, wherein the safeguarding system (12, 20) has at least one contactless distance sensor (12) and a control and evaluation unit (12, 20, 10) for carrying out a method in accordance with any one of the preceding claims.

## Revendications

1. Procédé de sécurisation d'une partie mobile d'une machine (10), en particulier d'un bras de robot, dans lequel une valeur de distance respective est mesurée le long de plusieurs faisceaux de mesure (14) par au moins un capteur de distance sans contact (12) se déplaçant avec la partie de machine, et les valeurs de distance mesurées sont comparées à au moins un seuil de distance afin de décider si une réaction de sécurité de la machine (10) est déclenchée, l'aptitude au fonctionnement du capteur de distance (12) est testée par comparaison d'une valeur de distance mesurée avec une valeur de référence,
**caractérisé en ce que**
la partie mobile de la machine et, avec celle-ci, le capteur de distance (12) sont tournés vers une autre orientation afin de pouvoir tester l'aptitude au de fonctionnement pour d'autres faisceaux de mesure (14), la rotation vers une autre orientation étant superposée au mouvement de travail proprement dit.

2. Procédé selon la revendication 1,
dans lequel, avant ou pendant un apprentissage, la partie mobile de la machine est tournée de telle sorte que deux modules de mesure se trouvent dans la même position respective avant et après la rotation.

3. Procédé selon la revendication 1,
dans lequel, dans l'autre orientation, la partie mobile de la machine peut continuer à exécuter une étape de travail, en particulier saisir ou traiter un objet (26) après la rotation.

4. Procédé selon la revendication 1,
dans lequel la rotation vers une autre orientation est effectuée dans différentes portées de mesure.

5. Procédé selon la revendication 1,
dans lequel la rotation vers une autre orientation est effectuée en deux ou plusieurs étapes.

6. Procédé selon la revendication 1,
dans lequel l'aptitude au fonctionnement du capteur de distance (12) est testée dans au moins une position de contrôle de la partie mobile de la machine par comparaison d'une valeur de distance mesurée à une valeur de référence.

7. Procédé selon la revendication 1,
dans lequel le test de l'aptitude au fonctionnement est réparti sur plusieurs positions de contrôle de la partie mobile de la machine.

8. Procédé selon la revendication 1,
dans lequel au moins une position de contrôle est intégrée dans le processus de mouvement de la partie de machine.

9. Procédé selon la revendication 1,
dans lequel, dans au moins une position de contrôle, l'aptitude au fonctionnement n'est testée que pour une partie des faisceaux de mesure (14).

10. Procédé selon la revendication 1 ou 2,
dans lequel, lors du mouvement de la partie mobile de la machine, au moins une position de contrôle n'est prise que de manière transitoire.

11. Procédé selon l'une des revendications précédentes,
dans lequel, dans au moins une position de contrôle, aucun mouvement de contrôle supplémentaire n'est effectué.

12. Procédé selon l'une des revendications précédentes,
dans lequel, dans au moins une position de contrôle, les faisceaux de mesure (14) tombent sur des contours naturels.

13. Procédé selon l'une des revendications précédentes,
dans lequel l'aptitude au fonctionnement du capteur de distance (12) est testée de manière cyclique au cours d'un cycle de test respectif, en particulier le cycle de test pouvant être prédéfini.

14. Procédé selon l'une des revendications précédentes,
dans lequel une réaction de sécurité de la machine (10) est déclenchée si l'aptitude au fonctionnement du capteur de distance (12) n'a pas pu être démontrée, en particulier au cours d'un temps de cycle de test.

15. Procédé selon l'une des revendications précédentes,
dans lequel on tient un registre du moment où l'aptitude au fonctionnement a été démontrée pour la dernière fois par rapport à un faisceau de mesure (14) respectif, en particulier sous la forme d'horodatages ou de drapeaux réinitialisés après un temps de cycle de test.

16. Procédé selon l'une des revendications précédentes,
dans lequel la partie mobile de la machine peut prendre au moins une position de contrôle au moins temporairement, sans que l'aptitude au fonctionnement soit testée dans la position de contrôle.

17. Procédé selon l'une des revendications précédentes,
dans lequel, dès que l'aptitude au fonctionnement a été démontrée pour tous les faisceaux de mesure (14) au cours d'un cycle de test, l'aptitude au fonctionnement n'est plus testée jusqu'à la fin du cycle de test.

18. Procédé selon l'une des revendications précédentes,
dans lequel le capteur de distance (12) est un capteur optoélectronique qui est conçu en particulier pour une mesure de distances par un procédé de temps de vol de la lumière.

19. Système de sécurisation (12, 20) pour une machine (10) comprenant une partie de machine mobile, le système de sécurisation (12, 20) présentant au moins un capteur de distance sans contact (12) ainsi qu'une unité de commande et d'évaluation (12, 20, 10) pour mettre en oeuvre un procédé selon l'une des revendications précédentes.
